# EUROPÄISCHE PATENTSCHRIFT

(11) **EP 0 365 898 B1**
(45) Veröffentlichungstag und Bekanntmachung des Hinweises auf die Patenterteilung: **26.05.1993**
(21) Anmeldenummer: 89118672.8
(22) Anmeldetag: 07.10.1989
(51) Int. Cl.: B09B 5/00

(54) **Verfahren und Vorrichtung zu Sanierung von kontaminiertem Bodenmaterial**
Process and apparatus for the sanitation of contaminated soil
Procédé et dispositif pour l'assainissement d'un sol contaminé

(30) Priorität: 22.10.1988 DE 3836130
(43) Veröffentlichungstag der Anmeldung: 02.05.1990
(73) Patentinhaber: Linde Aktiengesellschaft, 65189 Wiesbaden (DE)
(72) Erfinder: Lang, Udo, Dipl.-Ing., D-8000 München 70 (DE); Melzer, Reiner, Dipl.-Ing., D-8000 München 70 (DE); Schramm, Walter, D-8000 München 45 (DE)
(74) Vertreter: Schaefer, Gerhard, Dr.

(56) Entgegenhaltungen:
- WO-A-88/02285
- DE-A- 3 610 199
- DE-A- 3 803 634
- US-A- 3 966 981
- INDUSTRIAL AND ENGINEERING CHEMISTRY RESEARCH, Band 26, Nr. 10, Oktober 1987, Seiten 2058-2062, Washington, DC, US; K.M. DOOLEY et al.: "The use of entrainers in the supercritical extraction of soils contaminated with hazardous organics"

## Beschreibung

Die Erfindung betrifft ein Verfahren zur Sanierung von mit Schadstoffen verunreinigtem Bodenmaterial durch Auswaschen der Schadstoffe aus dem Bodenmaterial mittels einer Waschflüssigkeit und anschließende Abtrennung der Schadstoffe von der Waschflüssigkeit.

Es ist hinreichend bekannt, daß mit Schadstoffen stark kontaminierte Böden auf Fabrikgeländen, Mülldeponien usw. eine große Gefahr für die Umwelt darstellen. Beispielsweise können Schadstoffe in das Grundwasser gelangen und so die Trinkwasserversorgung großer Bevölkerungsteile gefährden. Insbesondere die Sanierung von Sondermülldeponien, deren Böden teilweise extrem hohe Schadstoffkonzentrationen aufweisen, stellt ein dringendes Problem dar. Oft sind auch größere Geländeabschnitte zum Beispiel mit Kohlenwasserstoff-Verbindungen verunreinigt, so daß großräumige Sanierungsmaßnahmen erforderlich sind.

Eine bekannte Methode zur Sanierung kontaminierten Bodenmaterials besteht in zwei Schritten. Zunächst werden die Schadstoffe mit einer Waschflüssigkeit, zum Beispiel Wasser oder einem aus speziellen Chemikalien bestehenden Lösungsmittel, aus dem Bodenmaterial ausgewaschen. Dann werden die Schadstoffe von der Waschflüssigkeit zum Beispiel durch Sedimentation, Flotation, Extraktion usw. abgetrennt. Meist werden zum Auswaschen der Schadstoffe große Mengen an Waschflüssigkeit benötigt, so daß die Abtrennung der Schadstoffe von der Waschflüssigkeit großdimensionierte Trenneinrichtungen erfordert. Mit Kohlenwasserstoff-Verbindungen verunreinigte Böden erfordern zum Beispiel immense Wassermengen, die in Kläranlagen gereinigt werden müssen. Diese Kläranlagen sind einerseits flächenintensiv, andererseits immobil für andere Sanierungsorte. Werden Chemikalien als Waschflüssigkeit verwendet, verbleibt eine unerwünschte Restbeladung von Schadstoffen im Bodenmaterial. Oft werden im Grunde nur die Kohlenwasserstoff-Verbindungen ausgetauscht.

Aus "Industrial and Engineering Chemistry Research, Band 26, Nr. 10, Oktober 1987, Seiten 2058-2062" ist ein Verfahren zur Bodensanierung bekannt, bei dem superkritisches Kohlendioxid als Waschmittel eingesetzt wird. Hierzu wird flüssiges Kohlendioxid auf einen Druck von 200 bis 350 atm komprimiert und mit ca. 5 Gew.% Toluen oder Methanol versetzt. Das superkritische Kohlendioxid wird in einem Festbettreaktor mit dem kontaminierten Bodenmaterial in Kontakt gebracht, wobei die Schadstoffe aus dem Bodenmaterial extrahiert werden. Stromabwärts vom Festbettreaktor werden die Schadstoffe schließlich vom Kohlendioxid abgetrennt.

Der vorliegenden Erfindung liegt die Aufgabe zugrunde, ein Verfahren der eingangs genannten Art so auszugestalten, daß eine effektive und wirtschaftliche Sanierung des Bodenmaterials erreicht wird.

Diese Aufgabe wird erfindungsgemäß durch die kennzeichnenden Merkmale des Anspruchs 1 gelöst.

Der Erfindung liegt dabei die Erkenntnis zugrunde, daß Kohlendioxyd in flüssiger Form mit vielen Schadstoffen, insbesondere mit Kohlenwasserstoffen und chlorierten Kohlenwasserstoffen mischbar ist und leicht wieder abgetrennt werden kann. Flüssiges Kohlendioxyd stellt dabei ein effektives Lösungsmittel dar und erlaubt eine Konzentrierung der Schadstoffe. Es müssen nur geringe Mengen an Waschflüssigkeit in einer Trenneinrichtung behandelt werden, um die Schadstoffe abzutrennen. Die Trenneinrichtung kann demzufolge relativ klein dimensioniert werden.

Gemäß der Erfindung werden folgende Verfahrensschritte durchlaufen: Zunächst wird das mit Schadstoffen verunreinigte Bodenmaterial in mindestens einen druckfesten Behälter eingefüllt. Danach wird in einer ersten Druckaufbauphase gasförmiges Kohlendioxyd in den Behälter eingeleitet und ein Druck von ca. 50 bis ca. 55 bar aufgebaut. In einer nachfolgenden zweiten Druckaufbauphase wird flüssiges Kohlendioxyd in den Behälter eingeleitet und ein Druck von ca. 60 bis ca. 65 bar aufgebaut. In einer anschließenden Waschphase wird der Behälter mit flüssigem Kohlendioxyd unter Beibehaltung des Druckes von ca. 60 bis ca. 65 bar gespült. Zweckmäßigerweise wird hierzu das unter Druck stehende Kohlendioxyd im Kreislauf von unten nach oben durch den Behälter geleitet. Dabei werden die Schadstoffe weitgehend aus dem Bodenmaterial ausgewaschen und lösen sich im flüssigen Kohlendioxyd. Es schließt sich dann eine erste Druckabbauphase an, in der das flüssige Kohlendioxyd aus dem Behälter abgezogen und auf ca. 50 bis ca. 55 bar entspannt wird. In einer nachfolgenden zweiten Druckabbauphase wird das flüssige Kohlendioxyd durch weiteres Entspannen auf ca. 1,2 bar in den gasförmigen Zustand überführt. Nun werden die in der flüssigen und/oder festen Phase verbliebenen Schadstoffe von dem gasförmigen Kohlendioxyd abgetrennt. Das gereinigte Bodenmaterial wird aus dem Behälter entnommen und neues verunreinigtes Bodenmaterial in den Behälter eingefüllt. Das von den Schadstoffen befreite gasförmige Kohlendioxyd wird verdichtet und im Kreislauf wieder zum Behälter zurückgeleitet. Es wird wieder mit der ersten Druckaufbauphase begonnen.

Gemäß einer Weiterbildung des Erfindungsgedankens werden zwei Behälter verwendet, die einen gemeinsamen Kohlendioxydkreislauf aufweisen. Die beiden Behälter werden in der oben beschriebenen Weise, aber zueinander phasenverschoben, betrieben. Während beim einen Behälter der Druck abgebaut wird, wird beim anderen Behälter der Druck aufgebaut. Vorteilhafterweise wird der Druckabbau des einen Behälters während der ersten Druckabbauphase zum Druckaufbau des anderen Behälters während der zweiten Druckaufbauphase benutzt. Durch taktweisen Betrieb der beiden Behälter wird so eine besonders effektive und wirtschaftliche Reinigung auch großer Mengen an verunreinigtem Bodenmaterial erreicht.

Das erfindungsgemäße Verfahren eignet sich zum Beispiel zur Sanierung von verseuchten Böden auf Fabrikgeländen, Sondermülldeponien, usw.. Besonders geeignet ist das Verfahren zur Sanierung von Altlasten von Kohlenwasserstoffen und deren Derivaten, da flüssiges Kohlendioxyd mit Kohlenwasserstoffen und deren Verbindungen besonders gut mischbar ist.

Die Erfindung bietet eine effektive und wirtschaftliche Methode zur Sanierung von insbesondere kohlenwasserstoffhaltigen Altlasten mit der Möglichkeit einer Konzentrierung der Schadstoffe. Die erfindungsgemäße Vorrichtung ist kompakt und leicht und kann schnell zu verschiedenen Einsatzorten gebracht werden.

Im folgenden soll die Erfindung anhand eines in den Zeichnungen schematisch dargestellten Ausführungsbeispiels näher erläutert werden:
Es zeigen
- Figur 1:: ein Fließschema des Verfahrens mit zwei Behältern, wobei im ersten Behälter Druck aufgebaut wird, während im zweiten Behälter Druck abgebaut wird.
- Figur 2:: ein Fließschema des Verfahrens mit zwei Behältern, wobei der erste Behälter mit flüssigem Kohlendioxyd gespült wird, während der zweite Behälter entleert und wieder befüllt wird.
- Figur 3:: ein Fließschema des Verfahrens mit zwei Behältern, wobei im ersten Behälter Druck abgebaut wird, während im zweiten Behälter Druck aufgebaut wird.
- Figur 4:: ein Fließschema des Verfahrens mit zwei Behältern, wobei der erste Behälter entleert und wieder befüllt wird, während der zweite Behälter mit flüssigem Kohlendioxyd gespült wird.

In den Figuren sind dieselben Anleigenteile mit denselben Bezugsziffern gekennzeichnet. Es sind jeweils die Strömungswege, die in den einzelnen Verfahrensschritten durchlaufen werden, dick gezeichnet. Die übrigen Strömungswege sind dünn gezeichnet.

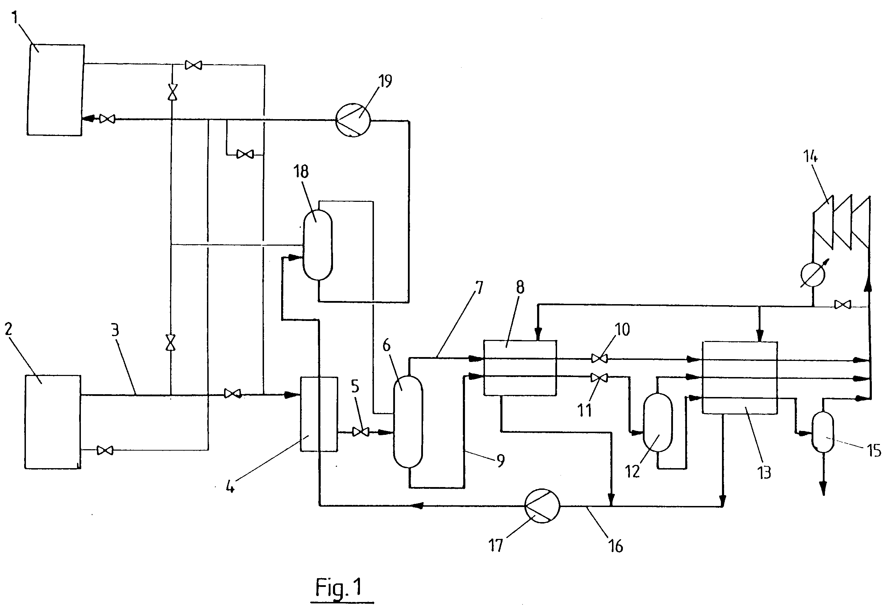

In Fig. 1 ist ein Verfahrensstadium dargestellt, bei dem sich der Behälter 1 im Druckaufbau befindet, während im Behälter 2 Druck abgebaut wird. Der Behälter 2 ist mit unter einem Druck von ca. 60 bis ca. 65 bar stehendem flüssigen Kohlendioxyd, das mit Kohlenwasserstoffen beladen ist, gefüllt. Das flüssige Kohlendioxyd wird über Leitung 3 aus dem Behälter 2 abgezogen, durch einen Wärmetauscher 4 geleitet und über das Entspannungsventil 5 auf einen Druck von ca. 15 bis ca. 21 bar entspannt. In einem Abscheider 6 erfolgt eine erste Trennung des Kohlendioxyds in einen gasförmigen und einen flüssigen Anteil. Der gasförmige Anteil wird am Kopf des Abscheiders 6 über Leitung 7 abgezogen und einem Wärmetauscher 8 zugeführt. Der flüssige Anteil wird am Fuß des Abscheiders 6 über Leitung 9 abgeführt und ebenfalls dem Wärmetauscher 8 zugeleitet. Über Entspannungsventile 10 und 11 wird das Kohlendioxyd weiter auf einen Druck von kleiner 3 bar, z.B. ca. 1,2 bar entspannt. Der flüssige Anteil wird einem weiteren Abscheider 12 zugeleitet, während der gasförmige Anteil über einen Wärmetauscher 13 unmittelbar einem Verdichter 14 zugeführt wird. In dem Abscheider 12 erfolgt eine weitere Trennung in einen gasförmigen und einen flüssigen Anteil des Kohlendioxyds, wobei der gasförmige Anteil am Kopf des Abscheiders 12 abgezogen und über den Wärmetauscher 13 gleich dem Verdichter 14 zugeführt wird, während der flüssige Anteil am Fuß des Abscheiders 12 abgezogen und über den Wärmetauscher 13 einem weiteren Abscheider 15 zugeführt wird. Vom Fuß des Abscheiders 15 werden die Kohlenwasserstoffe und deren Derivate abgezogen, während das gasförmige Kohlendioxyd ebenfalls dem Verdichter 14 zugeleitet wird. Im Verdichter 14 wird das gasförmige Kohlendioxyd auf einen Druck von ca. 25 bis ca. 35 bar, z.B. 26 bar, gebracht. Das so verdichtete Kohlendioxyd wird über die Wärmetauscher 8 und 13 geleitet, kondensiert und über Leitung 16 einer Pumpe 17 zugeführt. Die Pumpe 17 verdichtet das Kohlendioxyd weiter auf einen Druck von ca. 57 bar. Das so weiter verdichtete Kohlendioxyd wird über den Wärmetauscher 4 einer Pumpenvorlage 18 und einer nachgeschalteten weiteren Pumpe 19 zugeführt. Durch die Pumpe 19 wird das Kohlendioxyd weiter auf einen Druck von ca. 65 bar verdichtet und in den Behälter 1 eingeleitet. Im Behälter 1 wird ein Druck von ca. 65 bar aufgebaut.

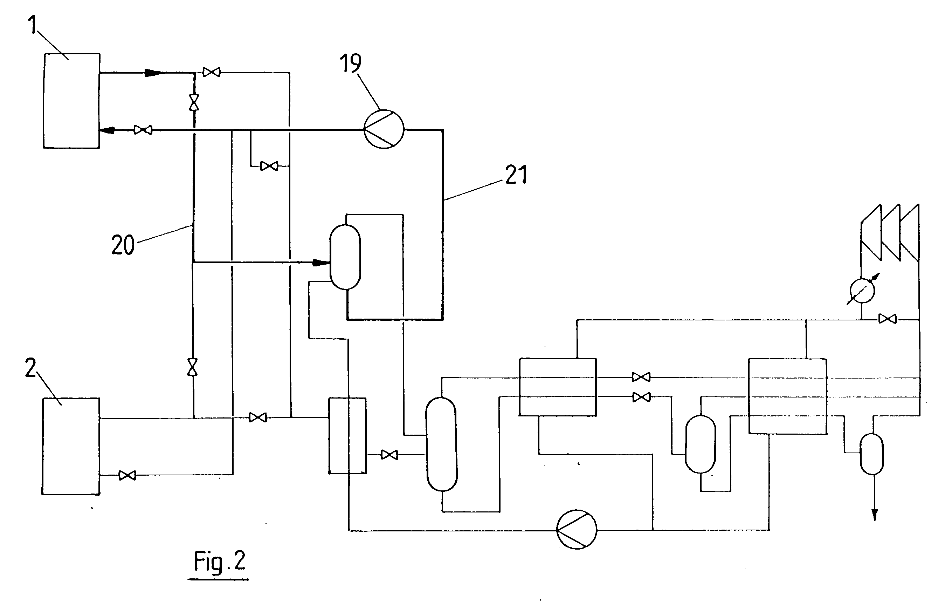

Ist im Behälter 1 der erforderliche Druck von ca. 65 bar erreicht, so wird im Behälter 1 die Waschphase eingeleitet. Dieses Verfahrensstadium ist in Fig. 2 gezeigt. Hierzu wird das auf ca. 65 bar verdichtete flüssige Kohlendioxyd mehrmals im Kreislauf über Leitungen 20 und 21 sowie die Pumpe 19 von unten nach oben durch den Behälter 1 geleitet. Dabei werden die Kohlenwasserstoffe aus dem Bodenmaterial ausgewaschen und im flüssigen Kohlendioxyd gelöst. Währenddessen wird der Behälter 2 entleert, mit neuem verunreinigten Bodenmaterial beschickt und druckfest verschlossen.

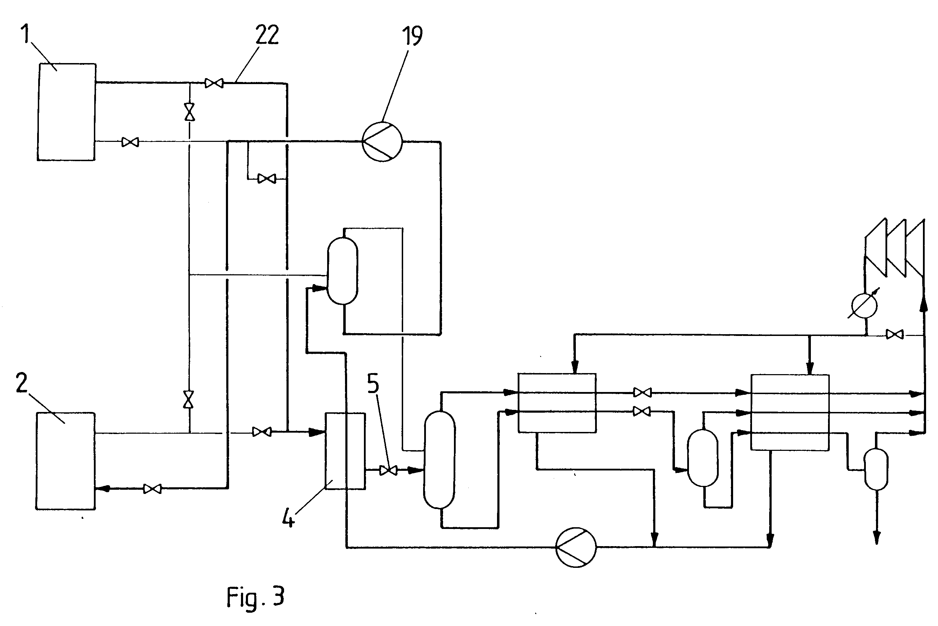

Ist das in Behälter 1 befindliche Bodenmaterial weitgehend von den Kohlenwasserstoffen gereinigt, erfolgt der Druckabbau des Behälters 1. Dieses Verfahrensstadium ist in Fig. 3 gezeigt. Das mit den Kohlenwasserstoffen beladene flüssige Kohlendioxyd wird über Leitung 22 und den Wärmetauscher 4 dem Entspannungsventil 5 zugeleitet, wo es auf ca. 25 bis ca. 35 bar, z.B. ca. 21 bar, entspannt wird. Das Kohlendioxid durchläuft anschließend bis zur Pumpe 19 dieselben Verfahrensschritte, wie sie in Fig. 1 für den Druckabbau des Behälters 2 gezeigt sind. Das durch die Pumpe 19 verdichtete Kohlendioxyd wird aber nicht wie in Fig. 1 in den Behälter 1, sondern in den Behälter 2 eingeleitet. Im Behälter 2 wird ein Druck von ca. 65 bar aufgebaut.

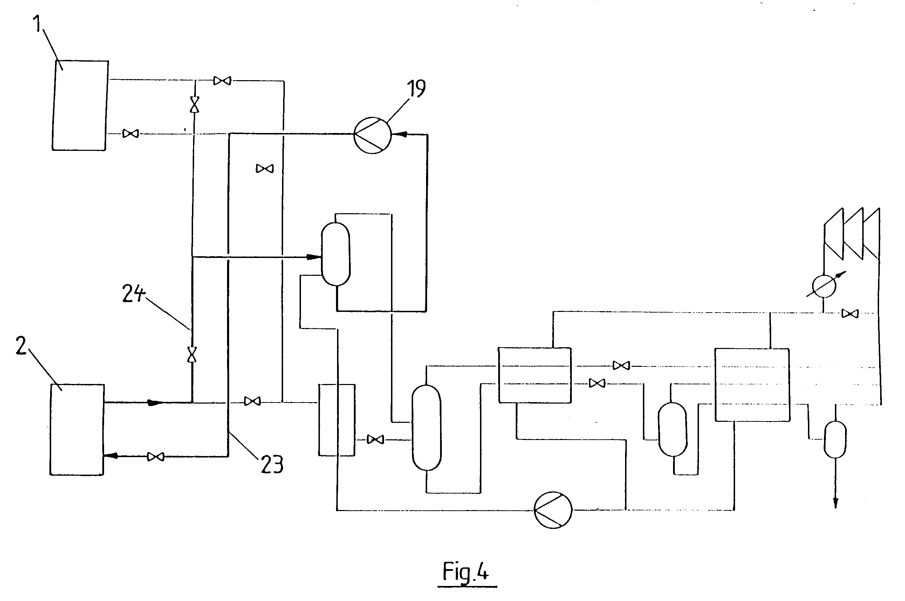

Ist dieser Druck erreicht, wird die Waschphase im Behälter 2 eingeleitet. Dieses Verfahrensstadium ist in Fig. 4 gezeigt. Hierzu wird das auf ca. 65 bar verdichtete flüssige Kohlendioxyd mehrmals im Kreislauf über Leitungen 24 und 23 sowie die Pumpe 19 von unten nach oben durch den Behälter 2 geleitet. Dabei werden die Kohlenwasserstoffe aus dem Bodenmaterial ausgewaschen und im flüssigen Kohlendioxyd gelöst. Währenddessen wird der Behälter 1 entleert, mit neuem verunreinigten Bodenmaterial beschickt und druckfest verschlossen. Ist das im Behälter 2 befindliche Bodenmaterial weitgehend von den Kohlenwasserstoffen gereinigt, erfolgt gemäß Fig. 1 wieder der Druckabbau von Behälter 2.

Die beiden Behälter 1 und 2 werden also taktweise und zueinander phasenverschoben betrieben. Auf diese Weise wird eine wirtschaftliche Auslastung der Anlage erreicht.

## Patentansprüche

1. Verfahren zur Sanierung von mit Schadstoffen verunreinigtem Bodenmaterial durch Auswaschen der Schadstoffe aus dem Bodenmaterial mittels einer Waschflüssigkeit und anschließende Abtrennung der Schadstoffe von der Waschflüssigkeit, **dadurch gekennzeichnet,** daß
a) das mit Schadstoffen verunreinigte Bodenmaterial in mindestens einen druckfesten Behälter (1) eingefüllt wird,
b) in einer ersten Druckaufbauphase gasförmiges Kohlendioxid in den Behälter (1) eingeleitet und ein Druck von ca. 50 bis ca. 55 bar aufgebaut wird,
c) in einer zweiten Druckaufbauphase flüssiges Kohlendioxid in den Behälter (1) eingeleitet wird und ein Druck von ca. 60 bis ca. 65 bar aufgebaut wird,
d) in einer Waschphase der Behälter (1) mit flüssigem Kohlendioxid gespült wird,
e) in einer ersten Druckabbauphase das flüssige Kohlendioxid aus dem Behälter (1) abgezogen und auf ca. 50 bis ca. 55 bar entspannt wird,
f) in einer zweiten Druckabbauphase das flüssige Kohlendioxid durch Entspannen auf ca. 1,2 bar in den gasförmigen Zustand überführt wird,
g) die Schadstoffe von dem gasförmigen Kohlendioxid abgetrennt werden,
h) das gereinigte Bodenmaterial aus dem Behälter (1) entnommen und verunreinigtes Bodenmaterial in den Behälter (1) eingefüllt wird, und
i) wieder mit der ersten Druckaufbauphase begonnen wird.

2. Verfahren nach Anspruch 1, dadurch gekennzeichnet, daß ein zweiter Behälter (2), der mit dem ersten Behälter (1) einen gemeinsamen Kohlendioxid-Kreislauf aufweist, phasenverschoben zum ersten Behälter (1) betrieben wird, wobei jeweils in einem Behälter der Druck aufgebaut wird, während im zweiten Behälter der Druck abgebaut wird.

3. Verfahren nach Anspruch 1 oder 2, dadurch gekennzeichnet, daß mit Kohlenwasserstoff-Verbindungen verunreinigtes Bodenmaterial saniert wird.

## Claims

1. A method of sanitizing soil material contaminated with pollutants by washing out the pollutants from the soil material by means of a washing fluid and then separating the pollutants from the washing fluid, characterised in that
a) the soil material contaminated with pollutants is introduced into at least one pressure-resistant container (1),
b) in a first pressure build-up phase gaseous carbon dioxide is introduced into the container (1) and a pressure of approximately 50 to approximately 55 bar is built up,
c) in a second pressure build-up phase liquid carbon dioxide is introduced into the container (1) and a pressure of approximately 60 to approximately 65 bar is built up,
d) in a washing phase the container (1) is flushed with liquid carbon dioxide,
e) in a first pressure reduction phase the liquid carbon dioxide is discharged from the container (1) and is expanded to approximately 50 to approximately 55 bar,
f) in a second pressure reduction phase the liquid carbon dioxide is converted into the gaseous state by expansion to approximately 1.2 bar,
g) the pollutants are separated from the gaseous carbon dioxide,
h) the purified soil material is removed from the container (1) and contaminated soil material is introduced into the container (1) and
i) the first pressure build-up phase is recommenced.

2. A method as claimed in Claim 1, characterised in that a second container (2), which possesses a common carbon dioxide circuit with the first container (1), is operated out of phase in relation to the first container (1), where in each case the pressure is built up in one container while the pressure is reduced in the second container.

3. A method as claimed in Claim 1 or 2, characterised in that soil material contaminated with hydrocarbon compounds is sanitized.

## Revendications

1. Procédé d'assainissement de prélèvement de sol pollué par des substances nocives par extraction des substances nocives par lavage du prélèvement de sol à l'aide d'un liquide de lavage et séparation subséquente hors du liquide de lavage des substances nocives, caractérisé en ce que:
a) le sol pollué par des substances nocives est déversé dans au moins un récipient (1) résistant à la pression;
b) au cours d'une première phase de montée en pression, du dioxyde de carbone gazeux est introduit dans le récipient (1) et on fait monter la pression jusqu'à environ 50 à 55 bar;
c) au cours d'une deuxième phase de montée en pression, on introduit du dioxyde de carbone liquide dans le récipient (1) et on fait monter la pression jusqu'à environ 60 à 65 bar;
d) au cours d'une phase de lavage, le récipient (1) est rincé au dioxyde de carbone liquide;
e) au cours d'une première phase de diminution de la pression, le dioxyde de carbone liquide est retiré du récipient (1) et détendu à environ 50 à 55 bars;
f) au cours d'une deuxième phase de diminution de pression, le dioxyde de carbone liquide est ramené à l'état gazeux par détente à environ 1,2 bar;
g) les substances nocives sont séparées du dioxyde de carbone gazeux;
h) le prélèvement de sol épuré est évacué du récipient (1) qui est ensuite rempli de prélèvement de sol non épuré; et
i) on recommence la première phase de montée en pression est reprise.

2. Procédé selon la revendication 1, caractérisé en ce qu'on met en oeuvre un deuxième récipient (2) qui comporte un circuit de dioxyde de carbone commun avec celui du premier récipient (1) mais décalé en phase par rapport au premier récipient (1), de manière que la pression augmente dans l'un des récipients, tandis qu'elle diminue dans le deuxième récipient.

3. Procédé selon la revendication 1 ou 2, caractérisé en ce que l'on assainit du prélèvement de sol pollué par des composés d'hydrocarbures.
